# EUROPÄISCHE PATENTSCHRIFT

(11) **EP 1 248 120 B1**
(45) Veröffentlichungstag und Bekanntmachung des Hinweises auf die Patenterteilung: **19.09.2007**
(21) Anmeldenummer: 02007006.6
(22) Anmeldetag: 27.03.2002
(51) Int. Cl.: G01S 17/89, G01S 17/88, F41G 7/22

(54) **Dual-Mode Suchkopf**
Dual mode seeker
Chercheur à double mode

(30) Priorität: 05.04.2001 DE 10117147
(43) Veröffentlichungstag der Anmeldung: 09.10.2002
(73) Patentinhaber: Diehl BGT Defence GmbH & Co.KG, 88662 Überlingen (DE)
(72) Erfinder: Barenz, Joachim, 88690 Uhldingen (DE); Tholl, Hans-Dieter, 88690 Uhldingen (DE)
(74) Vertreter: Diehl Patentabteilung

(56) Entgegenhaltungen:
- US-A- 5 056 914
- US-A- 5 528 354
- US-A- 5 696 577
- US-A- 5 953 110

## Beschreibung

### Technisches Gebiet

Die Erfindung betrifft einen elektro-optischen Dual-Mode-Sensor (passiv-optisch und LADAR), z. B. für zielsuchende Flugkörper mit abbildenden optischen Mitteln, durch welche eine Objektszene auf einem bildauflösendem optischen Sensor mit einer zweidimensionalen Anordnung von passiven Detektorelementen abbildbar ist, einem Laser, durch welchen ein Laserstrahl auf die Objektszene geleitet wird, einem von dem an einem Objekt in der Objektszene reflektierten Laserlicht über die abbildenden optischen Mittel beaufschlagten Sensor, und Mitteln zum Erzeugen von Objektinformationen (z. B. Entfernung) aus den Signalen des Laser-Sensors, wobei der Laser-Sensor Objektinformationen simultan von verschiedenen Bildpunkten der Objektszene liefert.

### Stand der Technik

Es gibt Dual-Mode-Sensoren, die neben zweidimensionalen Bildern auch Abstandsinformationen und damit Informationen über die räumliche Ausdehnungen des Objekts liefern. Die zweidimensionalen Bilder werden üblicherweise mittels passiver Sensoren erhalten, d. h. mittels Sensoren, deren Detektorelemente auf Strahlung ansprechen, die von den Objekten des Gesichtsfeldes ausgesendet oder reflektiert wird. Ein passiver Sensor selbst sendet, anders als beispielsweise bei RADAR, keine Strahlung aus.

Dual-Mode-Sensoren sind aus der DE 42 22 642 A1 bekannt. Sie umfassen bildverarbeitende, passive optische Sensoren, die in Zielsuchköpfen für die autonome Lenkung von Flugkörpern verwendet werden. Die Sensoren des genannten Standes der Technik umfassen weiterhin einen LADAR-Sensor. LADAR bedeutet, in Anlehnung an Radar, "Laser Detection and Ranging".

Ihr Aufgabenspektrum umfasst die Erfassung, Auswahl und Verfolgung unterschiedlicher Ziele im Weltraum, in der Luft, am Boden und auf der See. Die Erfassung und Auswahl von Zielen sowie die Bestimmung des Halte- bzw. Treffpunkts erfolgt in der Regel anhand thermischer Zielsignaturen und deren Geometriemerkmale.

Durch Tarnen und Täuschen oder auch durch spezielle Konstellationen innerhalb eines Szenariums können die Zielsignaturen erheblich verändert werden. Dies ist zum Beispiel bei einem Flugobjekt über intensivem Clutter der Fall. In manchen Anwendungsfällen, beispielsweise einem Direkttreffer, ist das Treffen eines bestimmten Punktes auf dem Ziel unter einem bestimmten Winkel für die Wirksamkeit eines Flugkörpers entscheidend. Eine Bildverarbeitung, die auf ein zweidimensionales passiv-optisches Bild angewendet wird, ist dann nur noch eingeschränkt in der Lage, den Flugkörper erfolgreich ins Ziel zu lenken.

Die Zielerfassung, Zielauswahl und Trefferwahrscheinlichkeit in komplexen Szenarien werden entsprechend der DE 42 22 642 A1 wesentlich verbessert durch die in Kombination der zweidimensionalen Winkelinformation mit einer Abstandsinformation, d. h. durch eine dreidimensionale Abbildung. Dual-Mode-Sensoren des genannten Standes der Technik erhalten diese Abstandsinformationen durch Verwendung des LADAR-Sensors. Ein Laserstrahl tastet dabei das Ziel Punkt für Punkt ab und der reflektierte Strahl wird mittels eines Polarisationsstrahlteilers von der übrigen Strahlung und von der ausgehenden Strahlung getrennt und detektiert. Aus der Laufzeit des Laserimpulses kann dann der Abstand des reflektierenden Punktes am Ziel ermittelt werden. Ein LADAR-Sensor hat dabei aufgrund der kürzeren Wellenlänge gegenüber einem Radar den Vorteil höherer Winkelauflösung. Er ist daher anders als ein passiver optischer Sensor und ein Radar-Sensor in der Lage, komplexe Szenarien und zeitlich dynamische Begegnungssituationen in allen drei Raumdimensionen, z. B. Winkel-Winkel-Abstand, mit hoher Auflösung zu analysieren. Die Winkelauflösung des Radars reicht aufgrund seiner großen Wellenlänge und der schnell veränderlichen Relativgeschwindigkeit der Zielannäherung im Allgemeinen nicht aus. Ein elektro-optischer Dual-Mode-Sensor hingegen kann dreidimensionale Bilder mit hoher Auflösung liefern. Die Bildfrequenz des bekannten Dual-Mode-Sensors ist durch die Abtastrate begrenzt.

Aus der US 5,953,110 (Burns) ist ein Vielkanal-Ladar bekannt. Die reflektierte Laser-Strahlung aus einem Vielfachstrahl wird dabei mittels eines Vielkanalempfängers detektiert und mittels einfacher Pulslaufzeitmessung ausgewertet. Der Empfänger umfasst eine Vielzahl von Lichtleitern, mittels derer die Strahlung an eine Vielzahl von Detektoren gekoppelt ist. Bei dieser Anordnung ist es möglich dreidimensionale Bilder in Echtzeit zu erhalten.

Die US 5,696,755 betrifft ein so genanntes Unterwasser-Laser-Radar, mit dem dreidimensionale Abbildungen einer Objektszene gemacht werden können. Hierzu wird von einer Lichtquelle (Laser) ein Lichtpuls ausgesandt und das reflektierte und gestreute Licht über eine Sammeloptik erfasst und auf einen oder mehrere Sensoren gelenkt. Bei einem solchen Sensor handelt es sich um einen analogen Auslese-Chip, der aus einem zweidimensionalen Array von Detektoren bzw. Kollektoren besteht, welches mit einer Speicher- und Schaltelektronik verknüpft ist. Über das zweidimensionale Array werden zwei Dimensionen einer Objektszene definiert, die dritte Dimension wird über die Rücklaufzeit eines ausgesendeten Lichtpulses definiert.

Aus der US 5,056,914 ist ein System zur Bestimmung von Objekteigenschaften bekannt, bei dem Strahlungspulse ausgesendet werden. Die an Objekten reflektierte Strahlung wird anschließend über eine Vielzahl von optischen Fasern einem CCD-Array zugeführt.

### Offenbarung der Erfindung

Es ist Aufgabe der Erfindung, einen Dual-Mode-Sensor zu schaffen, mit dem dreidimensionale Abbildungen entfernter Szenen mit hoher Bildfrequenz ermöglicht werden und Relativgeschwindigkeiten zu Objekten abschätzbar sind. Dabei soll die Anordnung einfach sein und möglichst wenig Raum einnehmen.

Erfindungsgemäß wird die Aufgabe bei einem Dual-Mode-Sensor der eingangs genannten Art dadurch gelöst, dass
a. der Laser-Sensor (14) ebenfalls eine zweidimensionale Anordnung (28) von Detektorelementen (30) aufweist, auf denen die Objektszene durch abbildende optische Mittel (16, 44) mittels des reflektierten Laserstrahls (21) abbildbar ist,
b. Mittel zur Modulation des Laserstrahls (37, 39) vorgesehen sind, mit denen eine Doppelpulsmodulation durchführbar ist,
c. mit den Mitteln (34) zum Erzeugen von Objektinformationen Pulslaufzeitmessungen durchführbar sind und
d. der Laser-Sensor (14), die Mittel (34) zum Erzeugen von Objektinformationen und die Mittel zur Modulation des Laserstrahls (37, 39) derart zusammenwirken, dass eine Information über die Geschwindigkeit des Objekts ermittelbar ist.

Dadurch braucht das Objekt nicht mehr nacheinander Punkt für Punkt abgetastet werden. Die Abbildung jedes Bildpunktes erfolgt vielmehr simultan. Die Bildfrequenz ist dann nicht mehr durch die Abtastrate begrenzt. Insbesondere bei schnellen Bewegungen wird somit die Erfassung der Objektszene stark verbessert.

Die räumliche Auflösung des Bildes ist weiterhin nicht mehr durch die Genauigkeit begrenzt, mit welcher der Laserstrahl positionierbar ist. Der Laserstrahl dient nur noch der Beleuchtung der Objektszene mit kohärentem Licht und braucht nicht mehr mit hoher Genauigkeit am Objekt positioniert zu werden. Vielmehr wird die Auflösung des die dritte Dimension liefernden "Laserbildes" durch das Raster des Laser-Sensors bestimmt.

Die abbildenden optischen Mittel, mit denen das reflektierte Laserlicht auf die weitere zweidimensionale Anordnung von Detektorelementen abbildbar ist, können vorzugsweise die optischen Mittel umfassen, durch welche die Objektszene auf dem bildauflösenden optischen Sensor abbildbar ist. Durch die gemeinsame Verwendung von optischen Bauelementen können Raum und Kosten eingespart werden.

Mit dem Laser-Sensor können Informationen über die Geschwindigkeit des Objektes ermittelbar sein. Dies kann zum Beispiel durch die Pulslaufzeitmessung eines Laserpulses in Verbindung mit einer Doppelpulsmodulation, bei der der Laser in einem definierten, kurzen Abstand zwei Pulse aussendet, erfolgen. Aus den Messungen kann dann die Relativgeschwindigkeit zu dem Objekt geschätzt werden.

Der Laser-Sensor umfasst vorzugsweise ein Strahlführungssystem, mit welchem die auf die verschiedenen Bildpunkte des Laserbildes reflektierten Strahlen zu einer Vielzahl von Detektorelementen geleitet werden. Das Strahlführungssystem kann von einer Vielzahl von Lichtleitern gebildet sein und jedem Lichtleiter wenigstens ein Detektorelement zuordnen. Dadurch ist die Auflösung nicht durch die Größe der Detektorelemente mit der zugehörigen Elektronik beschränkt. Der Detektor kann räumlich getrennt von der Bildebene angeordnet sein und dort eine quasi beliebige Form annehmen.

Vorzugsweise sind die Lichtleiter ohne weitere Ummantelung zu einem Lichtleiterbündel gebündelt. Dadurch wird der Füllfaktor der Lichtleiter in der Bildebene und damit die Auflösung erhöht. Zwischen den detektorseitigen Enden der Lichtleiter und der zweidimensionalen Anordnung von Detektorelementen kann ein Linsen-Array zur Ankopplung der Lichtleiter an die Detektorelemente angeordnet sein.

In einer besonders bevorzugten Ausgestaltung der Erfindung sind Mittel zur Modulation des Laserstrahls vorgesehen. Durch eine geeignete Modulation in Verbindung mit entsprechenden Signalverarbeitungsmethoden kann der Informationsgehalt, der mit dem Laser-Sensor erhalten wird, gesteigert werden. So können die Intensität, Frequenz, Phase oder Polarisation des Laserpulses moduliert werden und neben Höhensprüngen relativ zu einer Objektebene weitere volumetrische, Oberflächen- und Bewegungsmerkmale geschätzt werden.

Vorzugsweise ist ein Lichtleiter zum Leiten des Laserstrahls von dem Laser auf die optische Achse vorgesehen. Der Lichtleiter ermöglicht die Trennung der Laserbaugruppe zur Erzeugung des Laserstrahls von der Sendeoptik und gestattet die Laserbaugruppe an einer anderen Stelle anzuordnen.

Die Trennung der reflektierten Laserstrahlung von der übrigen Strahlung kann vorzugsweise über einen dichroitischen Strahlteiler erfolgen. Die Detektoren des optischen Sensors und des Laser-Sensors können daher in unterschiedlichen Positionen angeordnet sein und eine gegenseitige Störung wird verhindert.

In der Bildebene des Laser-Sensors können in einer hexagonal dichtesten Packung die Lichtleiter der Empfangsoptik gebündelt sein. Durch ein Mikrolinsenraster kann der Flächenfüllfaktor bei der Erfassung des reflektierten Laserstrahls weiter erhöht werden.

Weitere Ausgestaltungen der Erfindung sind Gegenstand der Unteransprüche. Ein Ausführungsbeispiel der Erfindung ist nachstehend unter Bezugnahme auf die beigefügten Zeichnungen näher erläutert.

### Kurze Beschreibung der Zeichnungen

- Fig. 1: ist eine schematische Darstellung der Strahlführung eines elektro-optischen Dual-Mode-Suchkopfs
- Fig.2a: ist eine Seitenansicht der Anordnung der Lichtleitfasern in der Bildebene des Ladars und der Detektoren
- Fig.2b: ist eine Vorderansicht der Anordnung der Lichtleitfasern in der Bildebene des Ladars
- Fig.3: zeigt eine Explosionsdarstellung der Ankopplung der Lichtleitfasern an die Detektorelemente

### Beschreibung eines Ausführungsbeispiels

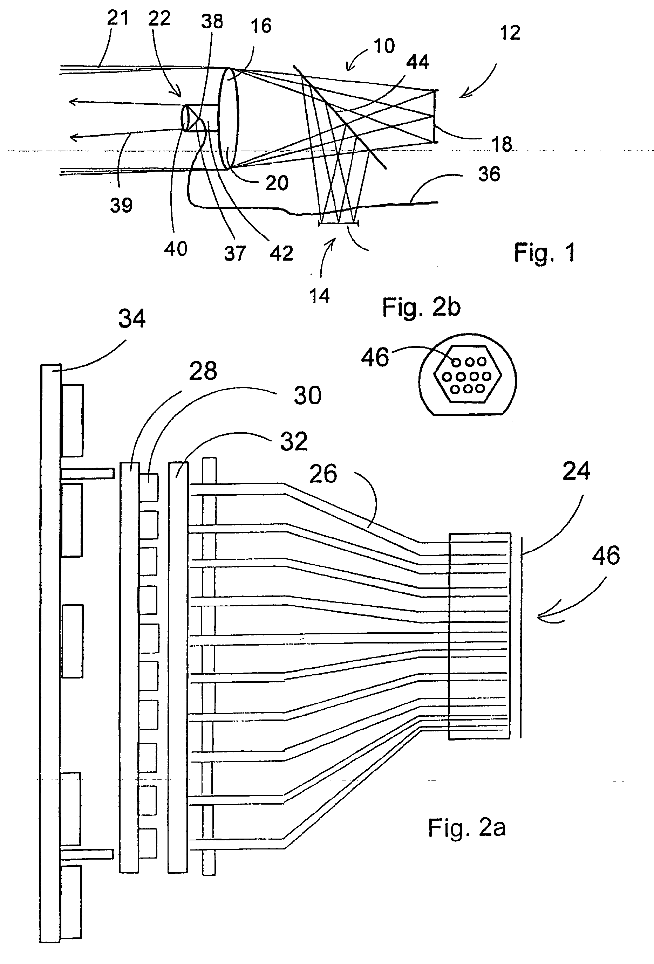

In Fig. 1 ist mit 10 ein elektro-optischer Dual-Mode-Suchkopf bezeichnet. Der Dual-Mode-Suchkopf 10 ist in der Nase eines (nicht dargestellten) Flugkörpers angeordnet. Der Dual-Mode-Suchkopf 10 umfasst einen passiven optischen Sensor 12 und einen aktiven Laser-Sensor (LADAR) 14. Der Suchkopf ist auf einer stabilisierten Plattform befestigt.

Der passive optische Sensor 12 besteht im wesentlichen aus einem optischen System 16, einer Detektorbaugruppe 18, einer detektornahen Elektronik (nicht dargestellt) zum Steuern und Auslesen des Detektors und einer Bildverarbeitungselektronik (nicht dargestellt) mit Bildverarbeitungssoftware.

Das optische System 16 umfasst eine Linse 20 zur Fokussierung der von einem Objekt emittierten oder reflektierten Strahlung 21 auf die Detektorbaugruppe 18. Üblicherweise wird die Infrarotstrahlung des Objekts erfasst, so daß die Linse 20 und der Detektor im IR-Bereich eine hohe Effektivität aufweisen. Der Detektor umfasst ein zweidimensionales gekühltes Detektorarray aus einer Vielzahl von Detektorelementen. Mit dem passiven optischen Sensor 12 werden zweidimensionale Infrarot-Bilder aufgenommen und mit einer Bildverarbeitungselektronik und -software weiter für die Zielsuche und -erfassung verarbeitet.

Der Laser-Sensor besteht aus einer Laserbaugruppe zur Generierung des Laserstrahls und Elektronik zur Modulation des Laserstrahls (nicht dargestellt), einer Sendeoptik 22, einer Empfangsoptik 20, Lichtleitfasern 26 (Fig.2a) zum Abtasten der Bildebene 24 des Laser-Sensors, einem Detektorarray 28 aus einer Vielzahl von Detektorelementen 30, einer Ankoppeloptik 32, die die Lichtleiter 26 mit den entsprechenden Detektorelementen 30 verbindet, einer Signalverarbeitungselektronik 34 und einer Elektronik zur Ablaufsteuerung des Laser-Sensors.

Die Laserbaugruppe ist ein üblicher IR-Laser mit der entsprechenden Steuerungselektronik. Der Laser kann im Pulsbetrieb arbeiten oder im CW-Betrieb. Das Laserlicht wird in einen Lichtleiter eingespeist. Der Lichtleiter ist in Fig. 1 mit 36 bezeichnet. Das Ende 38 des Lichtleiters 36 sitzt nahezu im Brennpunkt einer Linse 40. Damit wird das aus dem Lichtleiter 36 austretende Laserlicht 37 zu einem im wesentlichen parallelen Strahl 39 gebündelt, mit dem dann das (nicht dargestellte) Objekt beleuchtet wird.

Die Sendeoptik 22 mit der Linse 40 sitzt mittig vor der Linse 20 der Optik 16 des passiven optischen Sensors auf der optischen Achse vor einer Mittenausblendung 42. Der an dem Objekt reflektierte Laserstrahl wird von der Linse 20 der Empfangsoptik fokussiert. Ein dichroitischer Spiegel 44 lenkt den Strahl in die Bildebene 24 des Laser-Sensors.

In der Bildeben 24 sind die Enden 46 der gebündelten Lichtleiter 26 angeordnet. Die Lichtleiter 26 sind entmantelt und in einer hexagonal dichtesten Packung gepackt, wodurch sich eine Rastergröße von etwa 60 Mikrometer pro Rasterpunkt ergibt. Eine Draufsicht auf die Bildebene 24 ist in Fig. 2b dargestellt. Vor dem Lichtleiterbündel sitzt ein Mikrolinsenraster mit einer korrespondierenden hexagonal dichtesten Packung der Mikrolinsen.

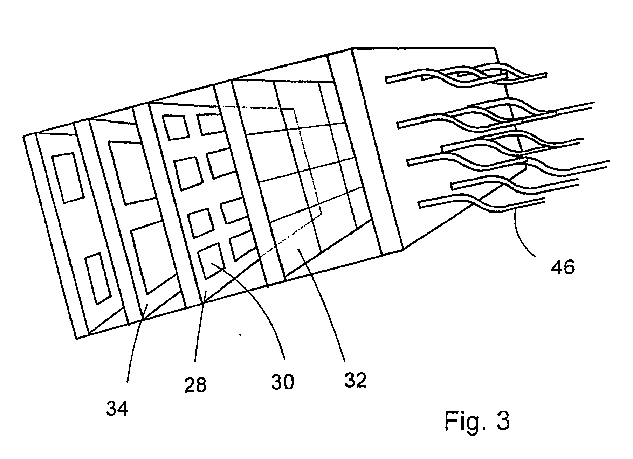

Die Lichtleiter 26 werden zu einem Detektorarray 28 mit einer Vielzahl von Detektorelementen 30 geführt. Die Ankopplung erfolgt mittels einer als mikrooptische Rasterplatte 32 (Linsenarray) ausgebildeten Ankoppeloptik. Dies ist in Fig. 3 nochmals in einer Explosionsdarstellung dargestellt. Hinter dem Detektorarray 28 ist die Auswerteelektronik 34 mit üblicher CMOS-Technologie angeordnet.

Die Auswertung und dreidimensionale Abbildung kann auf verschiedene Weise erfolgen:

Bei einer Pulslaufzeitmessung wird die Zeitdifferenz zwischen der Generierung des Laserpulses und dem Signal auf dem Detektor gemessen. Je nach abgebildetem Objektpunkt können sich diese Laufzeiten unterscheiden, wenn zwei Objektpunkte einen unterschiedlichen Abstand zum Laser-Sensor haben. Die Pulslaufzeitmessungen und die Lage der Bildpunkte in der Bildebene liefern also zwei Winkel- und eine Entfernungsschätzung zum Objekt. Durch die Bildung von Mittelwerten und Kontrastmaßen über das Bildfeld des Laser-Sensors lassen sich die absolute Entfernung zu einer Objektebene und das Höhenprofil relativ zu dieser Ebene schätzten. Aus diesen Angaben können je nach Vorwissen weitere Merkmale extrahiert werden.

Eine Pulslaufzeitmessung in Verbindung mit einer Doppelpulsmodulation liefert eine Schätzung für die Relativgeschwindigkeit zu einem Objekt. Bei einer Doppelpulsmodulation sendet der Laser in einem definierten, kurzen Abstand zwei Pulse aus.

Die Berücksichtigung der definierten Lage der Bildpunkte, sowie des zeitlichen Signalverlaufs ermöglicht die Auswertung des räumlichen und zeitlichen Verlaufs der vom Objekt reflektierten Laserstrahlung. Mit geeigneten, bekannten Auswerte- und Modulationsverfahren, bei denen die Intensität, Frequenz, Phase oder Polarisation des Laserstrahls moduliert werden, können volumetrische, Oberflächen- und Bewegungsmerkmale geschätzt werden.

## Patentansprüche

1. Elektro-optischer Dual-Mode-Sensor (10) für zielsuchenden Flugkörper mit abbildenden optischen Mitteln (20), durch welche eine Objektszene auf einen bildauflösenden Sensor (12) mit einer zweidimensionalen Anordnung (18) von passiven Detektorelementen abbildbar ist, einem Laser, durch welchen ein Laserstrahl (39) auf die Objektszene geleitet wird, einem von dem an einem Objekt in der Objektszene reflektierten Laserlicht (21) über die abbildenden optischen Mittel (20) beaufschlagten Laser-Sensor (14), und Mitteln (34) zum Erzeugen von Objektinformationen (z. B. Entfernung) aus den Signalen des Laser-Sensors (14), wobei der Laser-Sensor (14) Objektinformationen von verschiedenen Bildpunkten der Objektszene liefert,
**dadurch gekennzeichnet, dass**
a. der Laser-Sensor (14) ebenfalls eine zweidimensionale Anordnung (28) von Detektorelementen (30) aufweist, auf denen die Objektszene durch abbildende optische Mittel (16, 44) mittels des reflektierten Laserstrahls (21) abbildbar ist,
b. Mittel zur Modulation des Laserstrahls (37, 39) vorgesehen sind, mit denen eine Doppelpulsmodulation durchführbar ist,
c. mit den Mitteln (34) zum Erzeugen von Objektinformationen Pulslaufzeitmessungen durchführbar sind und
d. der Laser-Sensor (14), die Mittel (34) zum Erzeugen von Objektinformationen und die Mittel zur Modulation des Laserstrahls (37, 39) derart zusammenwirken, dass eine Information über die Geschwindigkeit des Objekts ermittelbar ist.

2. Dual-Mode-Sensor (10) nach Anspruch 1,
**dadurch gekennzeichnet, dass**
die abbildenden optischen Mittel (16), mit denen das reflektierte Laserlicht (21) auf die weitere zweidimensionale Anordnung (28) von Detektorelementen (30) abbildbar ist, die optischen Mittel umfassen, durch welche die Objektszene auf dem bildauflösenden passiven optischen Sensor (12) abbildbar ist.

3. Dual-Mode-Sensor (10) nach einem der vorhergehenden Ansprüche.
**dadurch gekennzeichnet, dass**
der Laser-Sensor (14) ein Strahlführungssystem (26, 32) umfasst, mit welchem die zu den verschiedenen Bildpunkten des Laserbildes reflektierten Strahlen (21) zu einer Vielzahl von Detektorelementen (30) geleitet werden.

4. Dual-Mode-Sensor (10) nach Anspruch 3,
**dadurch gekennzeichnet, dass**
das Strahlführungssystem (26, 30) eine Vielzahl von Lichtleitern (26) umfasst und jedem Lichtleiter (26) wenigstens ein Detektorelement (30) zugeordnet ist.

5. Dual-Mode-Sensor (10) nach Anspruch 4,
**dadurch gekennzeichnet, dass**
die Lichtleiter (26) zu einem Lichtleiterbündel gebündelt sind.

6. Dual-Mode-Sensor (10) nach einem der Ansprüche 4 oder 5,
**dadurch gekennzeichnet, dass**
zwischen den detektorseitigen Enden (46) der Lichtleiter (26) und der zweidimensionalen Anordnung (28) von Detektorelementen (30) eine Licht konzentrierende Optik, z. B. ein Linsen-Array (32) angeordnet ist.

7. Dual-Mode-Sensor (10) nach einem der vorhergehenden Ansprüche,
**dadurch gekennzeichnet, dass**
die Mittel zur Modulation des Laserstrahls (37, 39) Mittel zur Modulation der Intensität, Frequenz, Phase oder Polarisation des Laserstrahls (37, 39) umfassen.

8. Dual-Mode-Sensor (10) nach einem der vorhergehenden Ansprüche,
**gekennzeichnet durch**
ein Strahlführungssystem (36) zum Leiten des Laserstrahls (37, 39) von dem Laser zu einer Sendeoptik (22).

9. Dual-Mode-Sensor (10) nach einem der vorhergehenden Ansprüche,
**gekennzeichnet durch**
einen dichtroitischen Strahlteiler (44) zur Trennung der reflektierten Laserstrahlung (21) von der übrigen Strahlung (21).

10. Dual-Mode-Sensor (10) nach einem der Ansprüche 4 bis 9,
**dadurch gekennzeichnet, dass**
in der Bildebene (24) des Laser-Sensors (14) ein Raster von Licht konzentrierenden Optiken angeordnet ist.

11. Dual-Mode-Sensor (10) nach einem der Ansprüche 4 bis 10,
**dadurch gekennzeichnet, dass**
die Lichtleiter (26) der Empfangsoptik (20) des Laser-Sensors (14) in einer hexagonal dichtesten Packung gebündelt sind.

## Claims

1. Electrooptical dual mode sensor (10) for target-seeking missiles with imaging optical means (20), using which an object scene can be imaged on an imaging sensor (12) with a two-dimensional arrangement (18) of passive detector elements, with a laser, by means of which a laser beam (39) is guided to the object scene, with a laser sensor (14), which has laser light (21) reflected at an object in the object scene supplied to it via the imaging optical means (20), and with means (34) for producing object information (e.g. range) from the signals of the laser sensor (14), wherein the laser sensor (14) provides object information from different pixels of the object scene, **characterized in that**
a. the laser sensor (14) likewise has a two-dimensional arrangement (28) of detector elements (30), on which the object scene can be imaged using imaging optical means (16, 44) by means of the reflected laser beam (21),
b. means for modulating the laser beam (37, 39) are provided using which double-pulse modulation can be carried out,
c. the means (34) for producing object information can be used to carry out pulse delay-time measurements and
d. the laser sensor (14), the means (34) for producing object information and the means for modulating the laser beam (37, 39) interact in such a manner that an item of information regarding the speed of the object can be determined.

2. Dual mode sensor (10) according to Claim 1, **characterized in that** the imaging optical means (16), which can be used to image the reflected laser light (21) on the further two-dimensional arrangement (28) of detector elements (30), comprise the optical means which can be used to image the object scene on the imaging passive optical sensor (12).

3. Dual mode sensor (10) according to one of the preceding claims, **characterized in that** the laser sensor (14) comprises a beam guiding system (26, 32) which is used to guide the beams (21), which are reflected to form the different pixels of the laser image, to a multiplicity of detector elements (30).

4. Dual mode sensor (10) according to Claim 3, **characterized in that** the beam guiding system (26, 30) comprises a multiplicity of optical waveguides (26), and at least one detector element (30) is associated with each optical waveguide (26).

5. Dual mode sensor (10) according to Claim 4, **characterized in that** the optical waveguides (26) are bundled to form an optical waveguide bundle.

6. Dual mode sensor (10) according to either of Claims 4 or 5, **characterized in that** a light-concentrating optical means, e.g. a lens array (32), is arranged between the detector-side ends (46) of the optical waveguides (26) and the two-dimensional arrangement (28) of detector elements (30).

7. Dual mode sensor (10) according to one of the preceding claims, **characterized in that** the means for modulating the laser beam (37, 39) comprise means for modulating the intensity, frequency, phase or polarization of the laser beam (37, 39).

8. Dual mode sensor (10) according to one of the preceding claims, **characterized by** a beam guiding system (36) for guiding the laser beam (37, 39) from the laser to an optical transmitting means (22).

9. Dual mode sensor (10) according to one of the preceding claims, **characterized by** a dichroic beam splitter (44) for separating the reflected laser radiation (21) from the remaining radiation (21).

10. Dual mode sensor (10) according to one of Claims 4 to 9, **characterized in that** a grid of light-concentrating optical means is arranged on the image plane (24) of the laser sensor (14).

11. Dual mode sensor (10) according to one of Claims 4 to 10, **characterized in that** the optical waveguides (26) of the optical receiving means (20) of the laser sensor (14) are bundled in a hexagonally very dense package.

## Revendications

1. Capteur électro-optique à deux modes (10) pour des missiles de recherche de cibles comprenant des moyens optiques d'imagerie (20) par lesquels une scène d'objets peut être représentée sur un capteur à résolution d'images (12) comportant une disposition bidimensionnelle (18) d'éléments détecteurs passifs, un laser par lequel un faisceau laser (39) est dirigé sur la scène d'objet, un capteur laser (14) atteint via les moyens optiques d'imagerie (20) par la lumière laser (21) réfléchie par un objet dans la scène d'objet, et des moyens (34) destinés à produire des informations d'objet (par exemple la distance) à partir des signaux provenant du capteur laser (14), le capteur laser (14) délivrant des informations d'objet provenant de différents points d'image de la scène d'objet, **caractérisé en ce que**
a. le capteur laser (14) présente également une disposition bidimensionnelle (28) d'éléments détecteurs (30) sur lesquels la scène d'objet peut être représentée par des moyens optiques d'imagerie (16,44) au moyen du faisceau laser (21) réfléchi,
b. des moyens de modulation du faisceau laser (37,39) sont prévus par lesquels une modulation à double impulsion peut être réalisée,
c. des mesures de temps de propagation d'impulsion sont réalisables par les moyens (34) destinés à produire des informations d'objet et
d. le capteur laser (14), les moyens (34) destinés à produire des informations d'objet et les moyens de modulation du faisceau laser (37,39) coopèrent de façon à ce qu'une information puisse être déterminée via la vitesse de l'objet.

2. Capteur à deux modes (10) selon la revendication 1, **caractérisé en ce que** les moyens optiques d'imagerie (16) au moyen desquels la lumière laser réfléchie (21) peut être représentée sur l'autre disposition bidimensionnelle (28) d'éléments détecteurs (30) qui comprennent les moyens optiques par lesquels la scène d'objet peut être représentée sur le capteur optique passif à résolution d'image (12).

3. Capteur à deux modes (10) selon l'une quelconque des revendications précédentes, **caractérisé en ce que** le capteur laser (14) comporte un système de guidage de faisceau (26,32) par lequel les rayons (21) réfléchis vers les différents points d'image de l'image laser sont dirigés vers une pluralité d'éléments détecteurs (30).

4. Capteur à deux modes (10) selon la revendication 3, **caractérisé en ce que** le système de guidage de faisceau (26,30) comporte une pluralité de guides d'onde (26) et au moins un élément détecteur (30) est associé à chaque guide d'onde (26).

5. Capteur à deux modes (10) selon la revendication 4, **caractérisé en ce que** les guides d'onde (26) sont réunis en un faisceau de guides d'onde.

6. Capteur à deux modes (10) selon la revendication 4 ou 5, **caractérisé en ce qu'**une optique concentrant la lumière, par exemple un ensemble de lentilles (32), est disposée entre les extrémités (46) côté détecteurs des guides d'onde (26) et la disposition bidimensionnelle (28) d'éléments détecteurs (30).

7. Capteur à deux modes (10) selon l'une quelconque des revendications précédentes, **caractérisé en ce que** les moyens de modulation du faisceau laser (37,39) comportent des moyens de modulation d' intensité, de fréquence, de phase ou de polarisation du faisceau laser (37,39).

8. Capteur à deux modes (10) selon l'une quelconque des revendications précédentes, **caractérisé par** un système de guidage de faisceau (36) destiné à diriger le faisceau laser (37,39) depuis le laser vers une optique émettrice (22).

9. Capteur à deux modes (10) selon l'une quelconque des revendications précédentes, **caractérisé par** un diviseur de faisceau (44) dichroïque destiné à séparer le rayonnement laser réfléchi (21) du rayonnement restant (21).

10. Capteur à deux modes (10) selon l'une quelconque des revendications 4 à 9, **caractérisé en ce qu'**un réseau d'optiques concentrant la lumière est disposé dans le plan de l'image (24) du capteur laser (14).

11. Capteur à deux modes (10) selon l'une quelconque des revendications 4 à 10, **caractérisé en ce que** les guides d'onde (26) de l'optique réceptrice (20) du capteur laser (14) sont réunis en une structure compacte de forme hexagonale.
